Europäisches Patentamt

European Patent Office

Office européen des brevets

(19)

(11) Veröffentlichungsnummer: **0 080 657**
**A1**

## (12) EUROPÄISCHE PATENTANMELDUNG

(21) Anmeldenummer: **82110626.7**

(22) Anmeldetag: **18.11.82**

(51) Int. Cl.$^3$: **G 11 B 17/02**

(30) Priorität: **28.11.81 DE 3147324**

(43) Veröffentlichungstag der Anmeldung:
**08.06.83 Patentblatt 83/23**

(84) Benannte Vertragsstaaten:
**AT CH DE FR IT LI NL SE**

(71) Anmelder: **BASF Aktiengesellschaft**
**Carl-Bosch-Strasse 38**
**D-6700 Ludwigshafen(DE)**

(72) Erfinder: **Manzke, Klaus**
**Schulstrasse 10**
**D-6721 Westheim(DE)**

(72) Erfinder: **Brotzler, Roland**
**Langstrasse 34**
**D-6701 Hochdorf-Assenheim 2(DE)**

(72) Erfinder: **Hack, Joachim**
**Pfarrer-Friedrich-Strasse 34**
**D-6700 Ludwigshafen 29(DE)**

(54) **Laufwerk für Aufzeichnungsträger mit zentraler Einspannöffnung, insbesondere für flexible Aufzeichnungsträger.**

(57) Das Laufwerk (4), ist mit einem Magnetsystem (8) an Spann- und Aufnahmeteil (5, 26 bzw. 6) ausgebildet, das zumindest überwiegend innerhalb des Umfangs der Einspannöffnung des Aufzeichnungsträgers (4) angeordnet ist. Das Magnetsystem (8) besteht vorzugsweise aus einem Dauermagneten (9) mit hohem magnetischen Energieinhalt in einem Weicheisentopf (11) und einem Magnetschlußkörper (10). Das Antriebsmoment des Laufwerks (20, 30, 40) kann verringert werden, obwohl einfache Gleitlager (28) einsetzbar sind. Das Laufwerk (20, 30, 40) kann für optisch und elektrisch abtastbare Aufzeichnungsträger als auch vorzugsweise für Magnetfolien benutzt werden.

FIG.1

EP 0 080 657 A1

BASF Aktiengesellschaft                    O.Z. 0050/35604

Laufwerk für Aufzeichnungsträger mit zentraler Einspannöffnung, insbesondere für flexible Aufzeichnungsträger

Die Erfindung betrifft ein Laufwerk für Aufzeichnungsträger mit zentraler Einspannöffnung, insbesondere für flexible Aufzeichnungsscheiben, wie Magnetfolien, mit einem Spannteil und einem Aufnahmeteil, wovon der Spann- oder Aufnahmeteil angetrieben und der andere Teil drehbar gelagert ist, so daß nach Eingriff der Spann- und Aufnahmeteile der angetriebene Teil den nicht angetriebenen Teil mitnimmt, und wobei beim Eingriff der Teile der Aufzeichnungsträger zum Drehantrieb zwischen Spannflächen der Spann- und Aufnahmeteile eingespannt wird, und mit einem Magnetsystem, das koaxial zur Mittelachse der Spann- und Aufnahmeteile angeordnet, deren Eingriff miteinander durch Magnetkraft verstärkt.

Magnetische Speicher-Laufwerke, die als Speichermedium flexible, aus dünnen Folien mit magnetisierbarer Oberfläche bestehende Aufzeichnungsträger verwenden, sind z.B. aus der US-PS 3 891 796 und der DE-AS 26 07 518 bekannt. Bei diesen Beispielen sind die Vorrichtungen zum Spannen der mit einem Magnetkopf in Eingriff zu bringenden Aufzeichnungsträger so ausgebildet, daß ein starrer Spanntopf bzw. ein starrer Spannflansch einen großflächigen Ringmagneten tragen, der mit seinem Außendurchmesser in etwa identisch mit dem Durchmesser der Spannfläche der des Aufzeichnungsträgers ist und beim Schließen der Vorrichtung eine Zugkraft ausübt gegen eine Weicheisenscheibe. Da Spanntopf und Spannflansch nicht elastisch federnd sind, muß zwischen Dauermagnet und Weicheisenscheibe im Spannzustand ein Luftspalt bleiben, damit der Spanntopf oder Spannflansch mit ihren Ringspannflächen den flexiblen Aufzeichnungsträger andrücken und damit einspannen können. Durch das Auftreten des Lufspalts im Magnetsystem treten magnetische Streufelder auf, die in Magnetspeicher-Laufwerken nicht erwünscht sind. Obenge-De/P nannte Forderungen bedingen auch, daß zum Erzielen der notwendigen Spannkraft in der Praxis große Permanentmagnetmassen eingesetzt werden. Aus der DE-AS 26 07 518 ist es auch bekannt, ein Zentrierelement, das teilweise kleiner als die Einspannöffnung des Aufzeichnungsträgers ist, zu verwenden. Dabei ist ein Plattenteller zur Auflage des Aufzeichnungsträgers, hier einer optischen Videoplatte, vorgesehen, wodurch sich der Aufbau des Laufwerks vom vorliegenden Gerät wesentlich unterscheidet.

Es ist Aufgabe der vorliegenden Erfindung, ein Laufwerk für Aufzeichnungsträger, insbesondere flexible Aufzeichnungsscheiben mit einfachem Aufbau und sicherer Einspannfunktion zu schaffen. Für Laufwerke mit Magnetfolien sollen außerdem Störeinflüsse des Magnetsystems auf die Magnetaufzeichnung vermieden werden. Die vorliegende Erfindung ist für jede Art von flexiblen Aufzeichnungsträgern in Scheibenform mit Einspannöffnung vorteilhaft verwendbar.

Mit einem Laufwerk für Aufzeichnungsträger mit zentraler Einspannöffnung, insbesondere für flexible Aufzeichnungsträger, mit einem Spannteil und einem Aufnahmeteil, wovon der Spann- oder Aufnahmeteil angetrieben und der andere Teil drehbar gelagert ist, so daß nach Eingriff der Spann- und Aufnahmeteile der angetriebene Teil den nicht angetriebenen Teil mitnimmt, und wobei beim Eingriff der Teile der Aufzeichnungsträger zum Drehantrieb zwischen Spannflächen der Spann- und Aufnahmeteile eingespannt wird, und mit einem Magnetsystem, das koxial zur Mittelachse der Spann- und Aufnahmeteile angeordnet, deren Eingriff miteinander durch Magnetkraft verstärkt, wird die Aufgabe erfindungsgemäß gelöst, wenn das Magnetsystem zumindest überwiegend innerhalb des gedachten Zylinders vorgesehen ist, der durch den Umfang der Einspannöffnung des koxial zur Mittelachse liegenden Aufzeichnungsträgers bestimmt ist.

Damit läßt sich überraschenderweise die notwendige Spannkraft zwischen dem Spannteil und den unteren Laufwerksteilen nach Einspannen des Aufzeichnungsträgers auf einen sehr niedrigen Wert, praktisch null pond, reduzieren. Auch die notwendige Magnetkraft zwischen Spannteil und Aufnahmeteil beträgt nur etwa die Hälfte der üblichen Spannkraft bei der vorliegenden Laufwerksausbildung.

Es lassen sich erfindungsgemäß magnetische Streufelder vermeiden und dadurch unnötiger Energieverlust, wenn das Magnetsystem aus einem oder mehreren Magneten und mindestens einem Magnetschlußkörper besteht. In zweckmäßiger Ausbildung ist der Magnet ein Dauermagnet in einem Weicheisentopf für einen energiesparenden Magnetrückschluß.

In weiterer Ausgestaltung kann der Magnet auch ein Elektromagnet sein.

In praktischer Ausführung sind das Magnetsystem und der Magnetschlußkörper zentral am Spannteil bzw. am Aufnahmeteil vorgesehen.

Eine besonders einfache und wirksame Ausbildung ist erreichbar, wenn der Dauermagnet aus Magnetmaterial hoher Energiedichte, insbesonder aus Kobalt-Samarium, besteht Dadurch können die Masse des Magneten und das Volumen der Laufwerksteile auf ein notwendiges Minimum reduziert werden, ohne daß die Funktion beeinträchtigt wird.

Eine vorteilhafte Ausführung des Laufwerks ist besonders gegeben, wenn ein Gleitlager zur Lagerung des angetriebenen Spann- oder Aufnahmeteils vorgesehen ist, wodurch unwirtschaftliche Kugellager ersetzbar werden. Dennoch ist es möglich, die Drehmomentverluste gegenüber Laufwerken mit Kugellagern noch herabzusetzen, so daß als Direktantriebsorgane des angetriebenen Teils Motoren kleiner Antriebsleistung einsetzbar sind.

In weiterer zweckmäßiger Ausbildung können die Spannflächen als eine harte Ringfläche und ein im wesentlichen ringförmiger, federnd elastischer Randteil ausgebildet sein.

Dadurch wird eine sichere Zentrierung der Spann- und Aufnahmeteile und damit auch des Aufzeichnungsträgers vor Ineingriffkommen der Teile des Magnetsystems erreichbar, wobei die Spannkraft sehr gleichmäßig und zentral am Umfang der Einspannöffnung des Aufzeichnungsträgers zur Wirkung kommt.

Ausführungsbeispiele von erfindungsgemäßen Laufwerken werden nachfolgend anhand von Zeichnungen erläutert.

In der Zeichnung ist dargestellt in

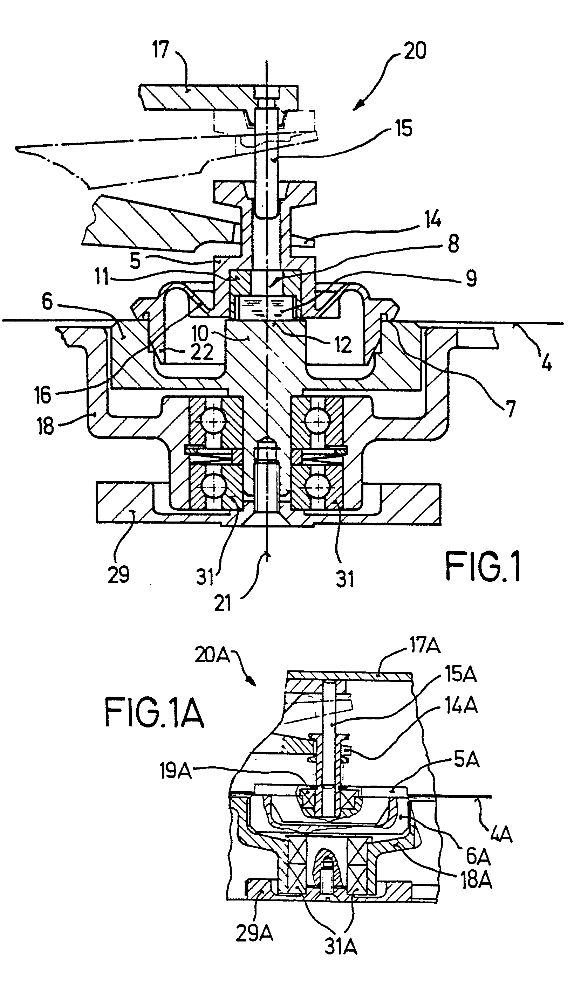

Figur 1 A    eine Spann- und Aufnahmevorrichtung eines Laufwerks für flexible Aufzeichnungsträger nach dem Stand der Technik,

Figur 1    eine erste Spann- und Aufnahmevorrichtung eines Laufwerks nach der Erfindung mit Betätigungshebel,

Figur 2    eine ähnliche Spann- und Aufnahmevorrichtung wie in Figur 1, jedoch mit Betätigungsplatte,

Figur 3    das Magnetsystem aus Figuren 1 und 2 als Einzelheit mit Verlauf der Magnetfeldlinien,

Figur 4    eine zweite Spann- und Aufnahmevorrichtung eines Laufwerkes mit Gleitlagern für den Aufnahmeteil.

In Figur 1 A ist ein Ausschnitt eines Laufwerks für flexible Aufzeichnungsträger, insbesondere für sogenannte Flexydisks[R] (Warenzeichen der BASF Aktiengesellschaft, Ludwigshafen) dargestellt (vgl. DE-AS 27 16 848).

Ein Gerätegehäuse 17A eines sogenannten Diskettenabspielgeräts 20A für eine kreisförmige, flexible Magnetfolie 4A mit einer zentralen Einspannöffnung und einer nicht dargestellten festen, rechteckförmigen Umschlaghülle enthält im wesentlichen die folgenden Bestandteile.

- Einen drehbar gelagerten Spann- und Zentrierkonus 5A als Spannteil für die Magnetfolie 4A,
- einen durch ein Antriebsorgan und eine Riemenscheibe 29A in Drehung versetzbarer Hohlkonus 6A, dessen Außengehäuse 18A am Gerätegehäuse 17A befestigt ist, als Aufnahmeteil für die Magnetfolie 4A,
- einen Betätigungshebel 14A, der mit dem Spannkonus 5A so verbunden ist, daß der Spannkonus 5A in Richtung zum Hohlkonus 6A und davon fortbewegbar ist, wodurch der Eingriff zwischen Spann- und Hohlkonus 5A und 6A herstellbar ist, der zum Einspannen der Magnetfolie 4A führt.

Die Betätigung des Betätigungshebels 14A kann vorteilhaft direkt über eine hier nicht gezeigte Einführklappe des Gerätegehäuses 17A und zeitlich derartig erfolgen, daß die Magnetfolie 4A mittels der Einführklappe in Einspann-Sollage überführt wird, bevor der Eingriff der Konusse 5A und 6A und damit der Einspannvorgang beginnt. Ein Führungsstift 15A stellt die zur Magnetfolie 4A senkrechte Verschiebung des Spannkonus 5A sicher. Der Antrieb des Hohlkonus 6A erfolgt üblicherweise über einen hier nicht gezeichneten Treibbandantrieb am Außenumfang der Riemenscheibe 29A. Die Drehlagerung des Hohlkonus 6A wird über schematisch angedeutete Doppel-Kugellager 31A sichergestellt. Der Spannkonus 5A ist ebenfalls über Kugellager, hier Einfach-Kugellager 19A, drehgelagert, um das aufzubringende Antriebsmoment des Antriebsorgans in Grenzen zu halten. Die nach Eingriff von Spann- und Hohlkonus 5A und 6A für einen ordungsgemäßen Drehantrieb der Magnetfolie 4A notwendige Kraft beträgt zwischen Spannkonus 5A und Gerätegehäuse 17A ca. 1 Kilopond (Kp), und diese Kraft muß während des Drehantriebs konstant und aufrechterhalten bleiben. Jedoch nur ein Teil dieses Kraftbedarfs wird direkt für die Einspannung der Magnetfolie 4A benötigt. Die Gesamtkraft von ca. 1 Kp wird ständig auf die Lager 31A und 19A, die deshalb zwangsläufig als Kugellager auszubilden waren, ausgeübt.

Die folgenden Ausführungsbeispiele erläutern die vorliegende Erfindung. Wenn dieselben Bezugszeichen wie in Figur 1A benutzt werden, jedoch ohne den Zusatz A, so dient dies der einfacheren, klaren Darstellung.

Obwohl der Aufzeichnungsträger bisher als Magnetfolie 4A bezeichnet wurde, kann der Aufzeichnungsträger 4 jeder beliebige Aufzeichungsträger mit Zentral-Einspannöffnung sein, der mittels der im folgenden beschriebenen Laufwerke zur Signal-Aufzeichnung und/oder Signalwiedergabe geeignet ist, unabhängig von der Art der Signale. Der Aufzeichnungsträger 4 kann außerdem aus mehreren kreisförmigen Teilen bestehen, die übereinander angeordnet sein können und möglicherweise gegenseitig verbunden sind oder bei Drehung zumindest mitgenommen werden.

In Fig. 1 ist eine Ausführungsform einer Spannvorrichtung eines Laufwerks 20 für Aufzeichnungsträger 4 gezeigt, wobei der Aufzeichnungsträger 4 mittels des Spann- und Zentrierkonus 5 im Bereich einer Ringfläche 7 auf den Hohlkonus oder Spindelflansch 6 gedrückt ist und bei Drehung des Spindelflansches 6 kraftschlüssig mitgenommen wird. Der Spannkonus 5 besitzt zweckmäßig elastische Federteile 16, die gemäß Form und Dimensionierung sowohl eine Zentrierung des Spannkonus 5 zum Hohlkonus 6 als auch eine schonende und sichere Einspannung des Aufzeichnungsträger 4 gewährleisten sollen.

Wenn Spann- und Hohlkonus 5 und 6 in Klemm-Eingriff sind, wie in den Figuren 1, 2 und 4, ist ein Magnetsystem 8 koaxial zur Mittelachse 21 der Konusse 5 und 6 angeordnet. Genauer soll dieses Magnetsystem 8 zumindest überwiegend innerhalb des gedachten Zylinders der durch den Einspannöffnungs-Umfang des Aufzeichnungsträgers 4 bestimmt ist, vorgesehen sein. Der Umfang der Einspannöffnung entspricht unter üblichen Toleranzen etwa dem Innenumfang der Aufnahmeöffnung des Hohlkonus 5. Das Magnetsystem 8 besteht im wesentlichen aus einem Magneten 9 und einem Magnetschlußkörper 10, die jeder an einem der Konusse 5 und 6 befestigt sind. Die wirksamen Polflächen 12 stehen in Eingriffslage der Konusse 5 und 6 in Kontakt miteinander, abgesehen von etwa vorhandenen, fertigungsmäßig bedingten Rauhigkeiten und/oder Welligkeiten der Materialoberfläche. Durch einen praktisch nicht vorhandenen Luftspalt zwischen den Polflächen, werden Energieverluste und magnetische Streufelder praktisch vermeidbar. Der Magnet 9 ist vorzugsweise ein Dauermagnet aus einem Magnetwerkstoff vorteilhaft mit hohem Energieinhalt, wie z.B. Kobalt-Samarium. Es kann aber auch ein Elektromagnet verwendet werden. Beim Kobalt-Samarium-Dauermagneten, der eine Zylinderform von 7 mm Durchmesser und 3 mm Höhe aufweisen kann, reicht eine Materialmasse von einem Gramm (1 g) aus, um die notwendige Spannkraft zwischen den Konussen 5 und 6 von nur 500 pond bereitzustellen.

In dieser Ausführung ist der Magnet 9 von einem Weicheisentopf 11, der den magnetischen Rückschluß herstellt und seitliche Streufelder vermeidet, umschlossen, wobei nur die Polfläche 12 frei bleibt. Der Magnetschlußkörper 10 ist innerhalb der Öffnung des Hohlkonus 6 und zweckmäßig einstückig damit hergestellt angeordnet. Auch die Stirnflächen des Weicheisentopfes 11 stoßen an die Polfläche 12 des Magnetschlußkörpers 10 in Eingriffsstellung.

Damit werden alle Feldlinien des Magneten 9 geschlossen und damit Streufelder und Anlöschen einer Magnetaufzeichnung vermieden.

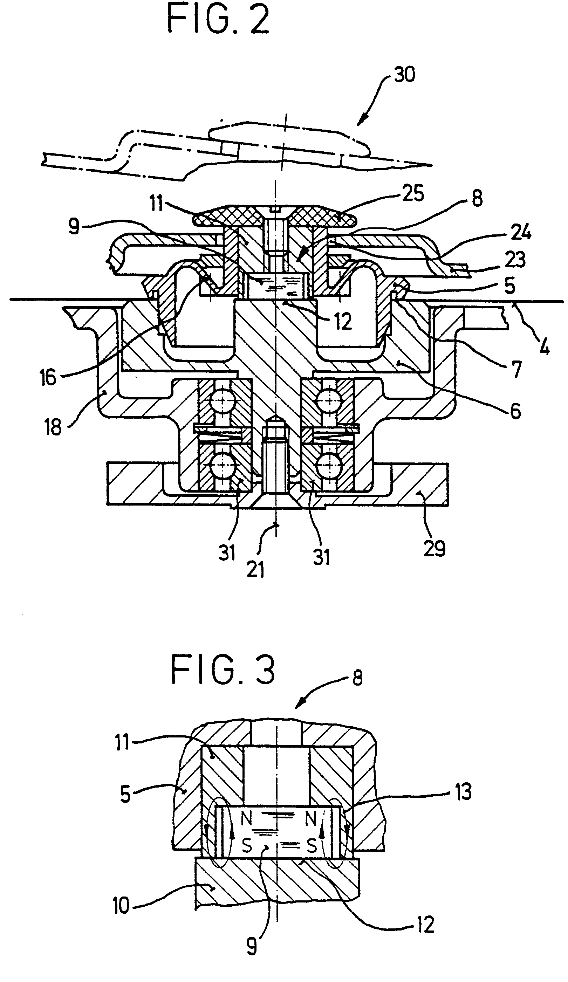

Aus Fig. 3 ist der Verlauf zweier geschlossener Feldlinien 13 ersichtlich. Der Durchmesser der Polfläche des Magnetschlußkörpers 10 ist zweckmäßig größer als der Außendurchmesser des Weicheisentopfes 11.

Beim Ineingriffbewegen des Spannkonus 5 über den Betätigungshebel 14 aus dessen strichpunktierter Ruhestellung tritt zeitlich zuerst der Mittelteil 22 des Spannkonus 5 zentrierend in die Öffnung des Hohlkonus 6, dann kommen die elastischen Randteile 16 des Spannkonus in Anlage an die Ringfläche 7 des Hohlkonus 6 und zuletzt (im dargestellten Beispiel erst im Bereich einiger Zehntelmillimeter Abstand der Polflächen 12) treffen die Polflächen unter Magnetkraft aufeinander, die End-Spannlage des Aufzeichnungsträgers ist damit erreicht, und es wirken obenerwähnte 500 pond als ständige Anziehungs- und Zusammenhaltekraft.

Damit ist die maximale Magnetkraft als senkrecht wirkende Spannkraft ausnutzbar und ein Energieverlust praktisch vermeidbar. Die Spannkraft wurde im Versuch ermittelt durch Bestimmung des Hemmomentes, also Ermittlung der bis zum Durchrutschen der Magnetfolie 4 notwendigen Kraft. Dabei ist der in der Zeichnung nicht dargestellte Magnetkopf und die diesem gegenüberliegende Andruckvorrichtung eines Magnetfolienlaufwerkes auf die äußerste Datenspur der Magnetfolie 4 eingestellt und in Kontakt damit, da in dieser Betriebslage das größte Drehmoment vom Antriebsorgan aufzubringen ist. Am Umfang der Riemenscheibe 29 wird bei Ver-

0080657

drehen derselben, die notwendige Kraft bis zum Durchrutschen der Folie 4 mittels einer an der Riemenscheibe 29 befestigten Federwaage bestimmt. Es wurden ca. 500 pond gemessen.

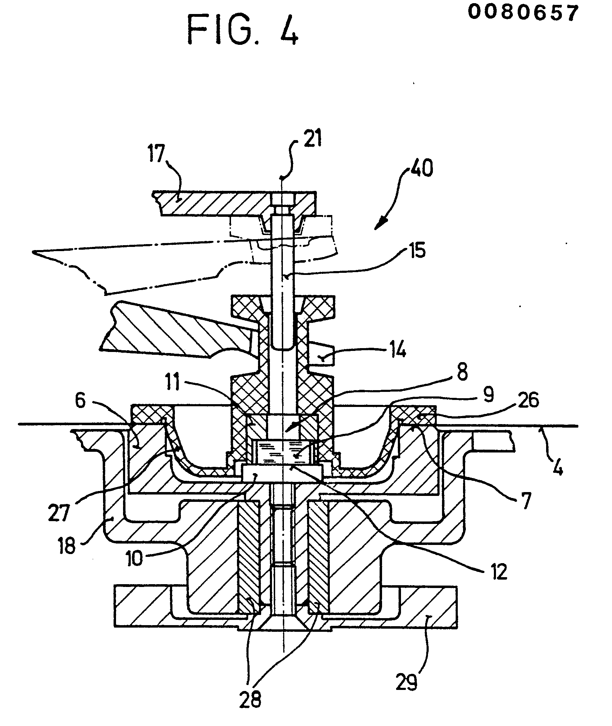

Diese Magnetkraft ist praktisch nur zwischen den Polflächen 12 wirksam, so daß auf die Lagerungen des Hohlkonus 6 und des Spannkonus 5 wirksame Kräfte praktisch nicht auftreten. Es ist somit vorteilhaft möglich, wie in den Ausführungen der Figuren 1, 2 und 4 gezeigt, auf ein Drehlager (31A in Figur 1A) zu verzichten und wie in Figur 4 dargestellt, die Kugellager 31A bzw. 31 der Figuren 1A, 1 und 2 durch wirtschaftlich günstigere Gleitlager zu ersetzen, die nicht zur Aufnahme axialer Kräfte geeignet sind. Durch beide Maßnahmen ist es zweckmäßig (dennoch) möglich, das gesamte notwendige Antriebsmoment herabzusetzen, so daß z.B. ein Direktantrieb des Hohlkonus 6 durch einen anstelle der Riemenscheibe 29 angeflanschten, hier nicht dargestellten Antriebsmotor kleiner Leistung möglich ist.

Beim Entspannen wird der Betätigungshebel 14 in seine Ruhestellung überführt, zweckmäßig durch einfaches Öffnen einer Einführklappe wie beim Laufwerk 20A, wobei die auf den Spannkonus 5 ausgeübte Kraft, z.B. Federkraft, größer sein muß als die Magnetanziehungskraft. Im Ergebnis wird der Spannkonus 5 aus dem Hohlkonus 6 herausgehoben, wobei die ungefähre Zentrumslage des Spannkonus durch einen Führungsstift 15 gewährleistet bleiben kann, wenn ein solcher benutzt wird, was vorteilhaft, aber nicht notwendig ist. Danach ist der Aufzeichnungsträger 4 aus dem Zwischenraum von Spann- und Hohlkonus 5 und 6 herausnehmbar und ein anderer kann eingeführt werden.

Figur 2 zeigt ein Laufwerk 30 mit einer Spannvorrichtung für Aufzeichnungsträger 4, in dem statt eines Betätigungshebels 14, der an einer seitlichen Einführklappe befestigt ist, eine obere Verschluß- und Betätigungsplatte 23 vorgesehen ist. In der Platte 23 ist eine Durchgangsöffnung 24 für einen Betätigungsknopf 25 ausgebildet, der am Spann- und Zentrierkonus 5 direkt befestigt ist. Beim Öffnen des Geräts wird die Platte 23, die hier schwenkbar gelagert ist, aber auch anders bewegbar sein kann, entriegelt und in die strichpunktierte Ruhestellung, z.B. über Federkraft, bewegt. Dabei werden der Knopf 25 und der Spannkonus 5 mit angehoben und letzterer kommt aus dem Eingriff mit dem Hohlkonus. Der Aufzeichnungsträger 4 ist entnehmbar. Der Knopf 25 kann auch abnehmbar am Spannkonus 5 befestigt sein, so daß das Magnetsystem 8 z.B. für Austauschzwecke zugänglich wird. Es ist dadurch z.B. möglich, Aufzeichnungsträger 4 mit unterschiedlicher Masse und/oder verschiedenen Abmessungen in ein und demselben Laufwerk zu betreiben, ohne auf die gleich sichere Spannkraft verzichten zu müssen, wenn Magnete mit entsprechend angepaßter Magnetkraft eingesetzt werden.

Der Vorgang des Ineingriffbringens der Konusse 5 und 6 erfolgt wie zu Figur 1 beschrieben, jedoch durch Absenken der Platte 23.

In Figur 4 ist ein Laufwerk 40 mit einer Spannvorrichtung dargestellt, die einen geänderten Spannkonus 26 mit ebenfalls anders geformten, elastischen Federteilen 27 enthält. Dadurch wird eine größere Kontaktfläche zwischen der Ringfläche 7 des Hohlkonus 6 und dem Spannrand des Spannkonus 26 erreicht.

Eine besonders vorteilhafte Ausführung wird in der Verwendung von handelsüblichen Gleitlagern 28 statt teurer Kugellager 31 bzw. 31A gesehen.

**0080657**

Patentansprüche

1. Laufwerk für Aufzeichnungsträger mit zentraler Einspannöffnung, insbesondere für flexible Aufzeichnungsscheiben, wie Magnetfolien, mit einem Spannteil (5, 26) und einem Aufnahmeteil (6), wovon der Spann- oder Aufnahmeteil (5, 26 bzw.6) angetrieben und der andere Teil drehbar gelagert ist, so daß nach Eingriff der Spann- und Aufnahmeteile (5, 26 u. 6) der angetriebene Teil den nicht angetriebenen Teil mitnimmt, und wobei beim Eingriff der Teile der Aufzeichnungsträger (4) zum Drehantrieb zwischen Spannflächen der Spann- und Aufnahmeteile (5, 26 und 6) eingespannt wird, und mit einem Magnetsystem (8), das koaxial zur Mittelachse (21) der Spann- und Aufnahmeteile (5, 26 und 6) angeordnet deren Eingriff miteinander durch Magnetkraft verstärkt, dadurch gekennzeichnet, daß das Magnetsystem (8) zumindest überwiegend innerhalb des gedachten Zylinders vorgesehen ist, der durch den Umfang der Einspannöffnung des koaxial zur Mittelachse (21) liegenden Aufzeichnungsträgers (4) bestimmt ist.

2. Laufwerk nach Anspruch 1, dadurch gekennzeichnet, daß das Magnetsystem aus einem oder mehreren Magneten (9) und einem Magnetschlußkörper (10) besteht.

3. Laufwerk nach Anspruch 2, dadurch gekennzeichnet, daß der Magnet ein Dauermagnet (9) in einem Weicheisentopf (11) für einen energiesparenden Magnetrückschluß ist.

4. Laufwerk nach Anspruch 2, dadurch gekennzeichnet, daß der Magnet (9) ein Elektromagnet ist.

5. Laufwerk nach Anspruch 2, dadurch gekennzeichnet, daß das Magnetsystem (8) zentral am Spannteil (5, 26) und der Magnetschlußkörper (10) zentral am Aufnahmeteil (6) vorgesehen ist.

6. Laufwerk nach Ansprüchen 1 bis 3, dadurch gekennzeichnet, daß der Dauermagnet (9) aus Magnetmaterial hoher Energiedichte, insbesondere aus Kobalt-Samarium, besteht.

7. Laufwerk nach Anspruch 1 und einem oder mehreren der Ansprüche 2 bis 6, dadurch gekennzeichnet, daß die Spannflächen als eine harte Ringfläche (7) und ein im wesentlichen ringförmiger elastischer Federteil (16, 27) ausgebildet sind.

8. Laufwerk nach Anspruch 1 und 2, dadurch gekennzeichnet, daß ein Gleitlager (28) zur Lagerung des angetriebenen Teils (6) vorgesehen ist.

Zeichn.

FIG.1

FIG.1A

# FIG. 2

# FIG. 3

FIG. 4

3/3

0080657

Europäisches
Patentamt

**0080657**
Nummer der Anmeldung

**EUROPÄISCHER RECHERCHENBERICHT**

EP    82 11 0626

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| | --- | | G 11 B    17/02 |
| X | DE-B-1 153 913   (HARTING)<br><br>* Spalte 3, Zeilen 1-33; Figur 1 * | 1-3,5, 8 | |
| | --- | | |
| A | FR-A-2 428 296   (PHILIPS)<br><br>* Seite  7,  Zeile 28 - Seite 8, Zeile 30; Figur 3 * | 1-3,5, 7 | |
| | --- | | |
| A | FR-A-2 337 397   (THOMSON-BRANDT)<br>* Seite  6,  Zeile 11 - Seite 7, Zeile  31;  Seite  9,  Zeile 13 - Seite 10, Zeile 24; Figuren 1,2,6 * | 1-5,7 | |
| | --- | | |
| A | FR-A-2 363 161   (PHILIPS)<br><br>* Seite 6, Zeilen 27-36; Figur 3 * | 1-3,5, 8 | RECHERCHIERTE SACHGEBIETE (Int. Cl. ³) |
| | ----- | | G 11 B |

Der vorliegende Recherchenbericht wurde für alle Patentansprüche erstellt.

| Recherchenort<br>DEN HAAG | Abschlußdatum der Recherche<br>25-02-1983 | Prüfer<br>SANDRI S.E. |
|---|---|---|